# EUROPÄISCHE PATENTSCHRIFT

(11) **EP 2 444 227 B1**
(45) Veröffentlichungstag und Bekanntmachung des Hinweises auf die Patenterteilung: **05.10.2016**
(21) Anmeldenummer: 11185742.1
(22) Anmeldetag: 19.10.2011
(51) Int. Cl.: B29C 47/02, F21S 4/00, B29C 47/28, B29C 47/90, B29C 47/34

(54) **Verfahren zum kontinuierlichen Herstellen eines LED-Bandes**
Method for continuous manufacturing of an LED strip
Procédé de fabrication en continu d'une bande de DEL

(30) Priorität: 19.10.2010 DE 102010048703
(43) Veröffentlichungstag der Anmeldung: 25.04.2012
(73) Patentinhaber: Döllken-Weimar GmbH, 99428 Nohra/Weimar (DE)
(72) Erfinder: Breuning, Wolfgang, 96275 Marktzeuln (DE)
(74) Vertreter: von dem Borne, Andreas

(56) Entgegenhaltungen:
- EP-A2- 0 760 448
- WO-A1-98/23896
- WO-A1-2007/082838
- WO-A1-2009/010502
- CN-U- 201 764 338
- DE-A1-102005 025 214
- US-A- 4 521 363
- US-A- 4 912 142
- US-A- 5 151 147
- US-A1- 2003 205 313

## Beschreibung

Die Erfindung betrifft ein Verfahren zum kontinuierlichen Herstellen eines (endlosen) LED-Bandes, wobei ein mit mehreren Leuchtdioden bestücktes LED-Funktionsband in einer Extrusionsvorrichtung kontinuierlich in eine Schmelze aus zumindest einem transparenten thermoplastischen Kunststoff eingebettet wird. - Transparent meint im Rahmen der Erfindung transparent für sichtbares Licht. Davon soll auch bloße (streuende) Lichtdurchlässigkeit, Transluzenz und Opazität umfasst sein. Bestücktes LED-Funktionsband meint ein Trägerband, welches zum Beispiel in vorgegebenen Abständen mit einer Vielzahl von Leuchtdioden (LED's) bestückt ist und welches außerdem mit in Längsrichtung des Trägerbandes verlaufenden Leiterbahnen und darüber hinaus mit elektrischen bzw. elektronischen Bauelementen bestückt ist, welche in üblicher Weise für den Betrieb der Leuchtdioden erforderlich sind. Solche LED-Funktionsbänder sind aus der Praxis grundsätzlich bekannt, sie werden in der Regel mit einer Versorgungsspannung von 12 Volt oder 24 Volt (Gleichstrom) betrieben.

Aus der Praxis kennt man LED-Bänder, die in bestimmten Längen hergestellt werden und bei denen das LED-Funktionsband in einen transparenten Kunststoff eingegossen wird. Die Herstellung ist aufwendig und nachteilig ist insbesondere die Tatsache, dass sich solche LED-Bänder lediglich in sehr begrenzter Länge herstellen lassen. Dieses führt zu recht hohen Herstellungskosten und zu Beschränkungen beim praktischen Einsatz.

In der Literatur wurde bereits vorgeschlagen, LED-Bänder kontinuierlich im Wege der Extrusion herzustellen (vgl. EP 0 760 448 A2, EP 0 911 573 A2 und EP 0 611 040 B1). Das vorgefertigte LED-Funktionsband wird kontinuierlich von einer Abwickelvorrichtung abgerollt und gemeinsam mit "Bus-Elementen" einer Extrusionsvorrichtung zugeführt. In der Extrusionsvorrichtung wird das LED-Funktionsband gemeinsam mit den Bus-Elementen in ein thermoplastisches Kunststoffmaterial eingebettet. Bei dem thermoplastischen Kunststoff kann es sich zum Beispiel um ein HDPE handeln, wobei das thermoplastische Material bei einer Temperatur von weniger als 170°C extrudiert wird (vgl. EP 0 760 448 B1). Die Abkühlung des aus dem Extruder austretenden LED-Bandes kann beispielsweise in einem Wassertank erfolgen (vgl. EP 0 911 573 A2).

Die WO 98/23896 A1 beschreibt ein Verfahren zum Herstellen eines kontinuierlichen LED-Bandes aus einem transparenten Kunststoff. Als mögliche Materialien werden Polyvinylchlorid (PVC), Polyurethane (PU), Olefine oder dergleichen erwähnt.

Die Herstellung von LED-Bändern im Wege der Extrusion wird beispielsweise auch in der WO 2006/125338 A1 und der JP 2003347593 A (Patent Abstracts of Japan) beschrieben.

Trotz dieser Anregungen im druckschriftlichen Stand der Technik bereitet die kontinuierliche Herstellung von endlosen LED-Bändern im Wege der Extrusion in der Praxis Schwierigkeiten. Auf dem Markt sind daher bislang lediglich LED-Bänder in begrenzten Längen verfügbar, bei denen die LED-Bänder in bestimmten Längen in eine Vergussmasse eingegossen werden. - Hier setzt die Erfindung ein.

Der Erfindung liegt die Aufgabe zugrunde, ein Verfahren anzugeben, mit dem sich "endlose" LED-Bänder auf wirtschaftliche Weise kontinuierlich mit guter Qualität herstellen lassen.

Zur Lösung dieser Aufgabe lehrt die Erfindung ein Verfahren zum kontinuierlichen Herstellen eines (endlosen) LED-Bandes mit den Merkmalen des Anspruchs 1. Es ist vorgesehen, dass das LED-Funktionsband in eine Schmelze aus zumindest einem thermoplastischen Polyurethan Elastomer eingebettet wird.

Die Erfindung geht dabei von der Erkenntnis aus, dass sich LED-Bänder überraschenderweise "endlos", das heißt in beliebiger oder nahezu beliebiger Länge im Wege der Extrusion herstellen lassen, wenn als transparenter thermoplastischer Kunststoff ein Polyurethan-Elastomer verwendet wird. Die Verwendung dieses Materials führt dazu, dass die Extrusion mit verhältnismäßig niedrigen Temperaturen geführt werden kann, so dass eine Beschädigung der elektronischen Komponenten und folglich des LED-Funktionsbandes nicht zu befürchten ist.

Dabei schlägt die Erfindung vor, dass mit einer PU-Schmelze mit einer Temperatur von 120°C bis 130°C gearbeitet wird. Dabei handelt es sich um die Temperatur der Schmelze, die diese im Extrusionswerkzeug aufweist, das heißt die Temperatur, bei welcher das LED-Funktionsband in die Kunststoffschmelze eingebettet wird. Diese entspricht in der Regel im Wesentlichen der Temperatur, die die Schmelze am Exruderausgang aufweist.

Durch Verarbeitung dieses Materials bei diesen Temperaturen lassen sich LED-Bänder mit hoher Qualität herstellen. Das bedeutet, dass die LED-Funktionsbänder in eine hochtransparente elastische Kunststoffmasse eingebettet werden, wobei die fertigen LED-Bänder auch über die Länge einen homogenen Querschnitt aufweisen. Die Herstellung gelingt gleichsam in beliebiger Länge als Rollenware, denn die fertigen LED-Bänder lassen sich nach dem Abkühlen ohne Weiteres aufrollen und folglich auf einfache Weise lagern und transportieren. Am Einsatzort besteht dann die Möglichkeit, das LED-Band in nahezu beliebigen Länden zu konfektionieren. Denn das LED-Funktionsband wird bevorzugt mit in vorgegebenen Abständen angeordneten Anschlussstellen, sogenannten Piercing-Stellen hergestellt. An diesen "Piercing-Stellen" lässt sich das LED-Band einfach abschneiden und kontaktieren. Das LED-Band kann folglich in sehr großen Längen verlegt werden oder aber auch in einzelne Abschnitte aufgeteilt werden, je nach Anwendungszweck. Als LED's können beispielsweise weiße LED's aber auch mehrfarbig ansteuerbare LED's, sogenannte RGB-LED's verwendet werden. In der Regel werden diese LED's mit einer Versorgungsspannung von 12 Volt oder 24 Volt (Gleichstrom) betrieben.

Die PU-Schmelze wird vorzugsweise aus PU-Granulat hergestellt, welches in zumindest einem Extruder aufgeschmolzen und einem Extrusionswerkzeug zugeführt wird, wobei das LED-Funktionsband durch dieses Extrusionswerkzeug hindurchgeführt und darin in die Kunststoffschmelze eingebettet wird. Versuche haben gezeigt, dass sich LED-Bänder mit besonders hoher Qualität herstellen lassen, wenn das PU-Granulat vor dem Befüllen des Extruders vorgetrocknet wird, und zwar vorzugsweise über einen Zeitraum von mehr als einer Stunde, zum Beispiel zwei bis drei Stunden. Vorzugsweise wird das LED-Band bei einer Temperatur von mehr als 50°C, zum Beispiel 60°C bis 90°C vorgetrocknet. Bei dem Extruder kann es sich um einen herkömmlichen Extruder handeln, zum Beispiel einen Schneckenextruder oder einen Planetenextruder. Extruder meint im Rahmen der Erfindung jede Vorrichtung, die zum "Herausdrücken" der Schmelze sowie gegebenenfalls auch zum Aufschmelzen geeignet ist, zum Beispiel auch eine geeignete Pumpe.

Die Qualität des fertigen LED-Bandes lässt sich weiter positiv beeinflussen, wenn das bestückte LED-Funktionsband mit einer vorgegebenen Vorspannung durch das Extrusionswerkzeug hindurchgeführt bzw. hindurchgezogen wird. Dieses wird beispielsweise dadurch realisiert, dass das LED-Funktionsband von einer Abwickelvorrichtung abgewickelt wird, welche eine bestimmte Rückhaltekraft zur Verfügung stellt. Der Transport des LED-Funktionsbandes gegen diese Rückhaltekraft kann beispielsweise mit einer hinter dem Extrusionswerkzeug angeordneten Abzugsvorrichtung, zum Beispiel einer herkömmlichen Raupenkette oder einem Stollenabzugsband erfolgen. Dabei spielt es jedoch auch eine Rolle, dass das in das Extrusionswerkzeug einlaufende LED-Funktionsband bereits von der zugeführten Schmelze transportiert und gleichsam mitgenommen wird, so dass gegebenenfalls sogar auf einen Abzug verzichtet werden kann.

Stets ist es zweckmäßig, das aus dem Extrusionswerkzeug austretende LED-Band und folglich das in die PU-Schmelze eingebettete LED-Funktionsband in einer Kalibriervorrichtung unter Verfestigung der Schmelze abzukühlen. Dazu kann eine Abkühlung im Sinne einer Wasserfilmkalibrierung erfolgen. Das aus dem Extrusionswerkzeug austretende LED-Band durchläuft folglich in noch heißem Zustand ein Wasserbecken, durch welches das Band ohne Wandberührung hindurchgeführt wird. Auf diese Weise gelingt eine Verfestigung der Schmelze ohne Beeinträchtigungen der Geometrie des LED-Bandes. Die Wassertemperatur des Wasserbades kann dabei 10°C bis 25°C, vorzugsweise 12°C bis 20°C, zum Beispiel 15°C bis 18°C betragen. Das Band sollte vorzugsweise spätestens 30 sek. nach Zusammentreffen mit der Schmelze in die Kalibriervorrichtung (zum Beispiel das Wasserbad) einlaufen, vorzugsweise spätestens nach 20 sek.. So werden Beschädigungen des Funktionsbandes vermieden.

In der Regel lässt sich das LED-Funktionsband in dem Extrusionswerkzeug ohne Weiteres in die Kunststoff-Schmelze einbetten. Um den Verbund zwischen LED-Funktionsband und Kunststoffschmelze weiter zu verbessern, kann es gegebenenfalls zweckmäßig sein, das LED-Funktionsband vor und/oder während der Extrusion mit einem Haftvermittler zu versehen. Dazu kann der Haftvermittler beispielsweise vor Einlauf in das Extrusionswerkzeug auf das LED-Funktionsband aufgesprüht werden oder das LED-Funktionsband durchläuft ein Haftvermittler-Bad. Alternativ besteht die Möglichkeit, den Haftvermittler gemeinsam mit der Kunststoffschmelze im Wege der Koextrusion aufzutragen. Ein besonders guter Verbund zwischen Funktionsband und Kunststoff ist insbesondere dann vorteilhaft, wenn das fertige Band über einige Radien aufgewickelt wird.

Ferner liegt es im Rahmen der Erfindung, das LED-Funktionsband vor dem Einlaufen in das Extrusionswerkzeug vorzuwärmen.

Versuche haben im Übrigen gezeigt, dass es in der Praxis gegebenenfalls zu Schwierigkeiten beim Anlaufen des Extrusionsprozesses kommen kann, so dass dann zu Beginn des Extrusionsprozesses ein Abschnitt des LED-Bandes entsteht, dessen Qualität für den praktischen Einsatz unbefriedigend ist. In Abhängigkeit von der Länge dieses "Ausschusses" kann dieses dazu führen, dass der Extrusionsprozess zu Beginn mit einem LED-Funktionsband geführt wird, das anschließend nicht in der Praxis verwendet wird. Um die entstehenden Kosten im Zusammenhang mit diesem Ausschuss zu verringern, schlägt die Erfindung daher in alternativer Weiterbildung vor, dass zunächst ein dem LED-Funktionsband vorgeordnetes unbestücktes Trägerband als Vorlauf in eine Kunststoffschmelze eingebettet wird und dass nach einem Vorlauf vorgegebener Länge das bestückte LED-Funktionsband in das Extrusionswerkzeug einläuft. So kann es beispielsweise zweckmäßig sein, das als Rollenware angelieferte LED-Funktionsband in einem ersten Abschnitt unbestückt als leeres Trägerband auszuführen. Dieser den Vorlauf bildende Abschnitt kann beispielsweise eine Länge von mehr als einem Meter, zum Beispiel eine Länge von 5 m bis 10 m oder auch 5 m bis 20 m aufweisen. Da sich dieses unbestückte Trägerband kostengünstiger herstellen lässt als das LED-Funktionsband, lassen sich auf diese Weise die Kosten für den Anschluss verringern.

Ferner schlägt die Erfindung in besonders bevorzugter Weiterbildung vor, dass die PU-Schmelze mit der Maßgabe in das Extrusionswerkzeug eingeführt wird, das sich in dem Zuführkanal, durch den das LED-Funktionsband zugeführt wird, eine Schmelzewulst oder Schmelzewelle entgegen der Transportrichtung ausbildet, wobei das LED-Funktionsband in diese Schmelzewelle einläuft. Bei diesem Aspekt der Erfindung geht die Erfindung von der Erkenntnis aus, dass die verwendete PU-Schmelze verhältnismäßig leichtflüssig ist, so dass sie dazu neigt, entgegen der Transportrichtung aus dem Extrusionswerkzeug "herauszuquellen". Diese Bildung einer Schmelzewulst entgegen der Transportrichtung kann im Rahmen der Erfindung ausgenutzt werden, denn Versuche haben gezeigt, dass sich auf diese Weise ein LED-Band mit über die Länge homogenen Querschnitt herstellen lässt und dass die über die Länge ungleiche Bestückung des LED-Bandes überraschenderweise nicht zu Querschnittsunterschieden des LED-Bandes führt. Die Ausbildung dieser Wulst lässt sich durch Steuerung des Extruders einstellen, zum Beispiel durch die Schneckendrehzahl. In der Regel ist es zweckmäßig, wenn sich eine Schmelzewulst ausbildet, deren Höhe größer als die Höhe des fertigen LED-Bandes und/oder größer als die Höhe des formgebenden Düsenkanals des Werkzeugs ist. So kann die Höhe der Schmelzewulst zum Beispiel zumindest 50 % größer als die Höhe des LED-Bandes, vorzugsweise zumindest zweimal so groß wie die Höhe des LED-Bandes sein.

Es liegt im Rahmen der Erfindung, dass die LED-Funktionsbänder in eine (homogene) Kunststoffmasse aus einem einzigen Material eingebettet werden. Die Erfindung umfasst aber auch Ausführungsformen, bei denen durch Koextrusion zwei verschiedene Materialien, zum Beispiel PU und ein anderes Material oder zwei verschiedene PU-Materialien verwendet werden.

Die auf die erfindungsgemäße Weise hergestellten LED-Bänder lassen sich vielfältig einsetzen. Sie können zu Beleuchtungszwecken und Markierungszwecken eingesetzt werden. So lassen sie sich beispielsweise in Sockelleisten integrieren, so wie dieses beispielsweise in dem deutschen Gebrauchsmuster DE 20 2010 002 324 beschrieben wird. Damit lassen sich Räume, Flure und Wege beleuchten aber auch Wege markieren, zum Beispiel Fluchtwege. Die elektronischen Bauteile werden in zuverlässiger Weise in den Kunststoff eingebettet, so dass die LED-Bänder nicht nur im Innenbereich, sondern auch im Außenbereich verwendet werden können. Die einfache Kontaktierung und der Einsatz in nahezu beliebigen Längen bzw. Längenabschnitten erweitern die Einatzmöglichkeiten. Gegenüber vergossenen LED-Bändern, die üblicherweise in diskreten Längen hergestellt werden, lassen sich die endlosen LED-Bänder kostengünstiger herstellen und auch die Montage bzw. Verlegung ist in der Regel kostengünstiger, da die LED-Bänder vor Ort an die gewünschten Gegebenheiten angepasst werden können, so dass in der Regel mit geringem Ausschuss gearbeitet wird. Die LED-Bänder zeichnen sich insbesondere auch dadurch aus, dass sie unempfindlich gegen Feuchtigkeit sind, so dass auch Außenanwendungen möglich sind. Die ungeschützten LED-Funktionsbänder sind zwar sehr empfindlich gegen Feuchtigkeit, durch die Einbettung in die PU-Kunststoffmatrix gelingt jedoch ein hervorragender Schutz.

Im Folgenden wird die Erfindung anhand einer lediglich ein Ausführungsbeispiel darstellenden Zeichnung näher erläutert. Es zeigen
Fig. 1 eine Vorrichtung zum kontinuierlichen Herstellen eines (endlosen) LED-Bandes in einer schematischen Seitenansicht,
Fig. 2 ein bestücktes LED-Funktionsband in einer Draufsicht,

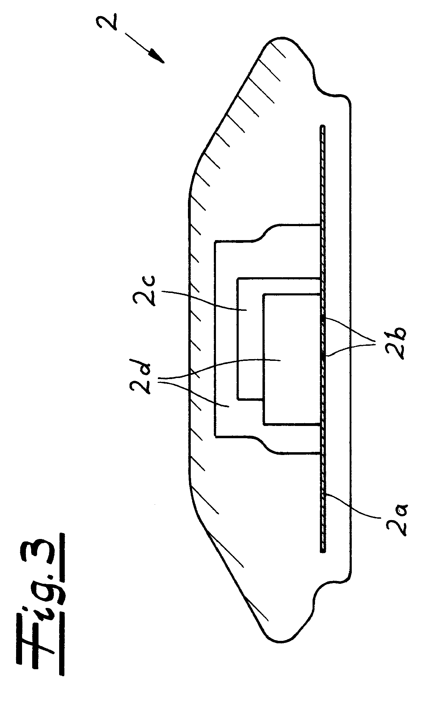

Fig. 3 ein mit der Vorrichtung nach Fig. 1 hergestelltes LED-Band im Querschnitt,
Fig. 4 ein Extrusionswerkzeug für die Vorrichtung nach Fig. 1 in einer perspektivischen Ansicht,
Fig. 5 einen Schnitt durch den Gegenstand nach Fig. 4 (Ausschnitt) und
Fig. 6 den Gegenstand nach Fig. 5 mit einem Einsatzteil ("Schuh").

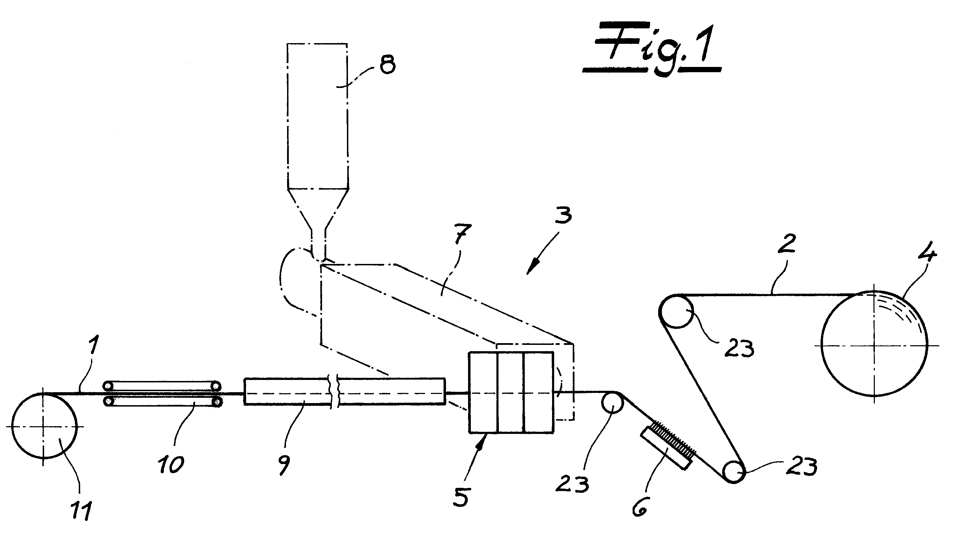

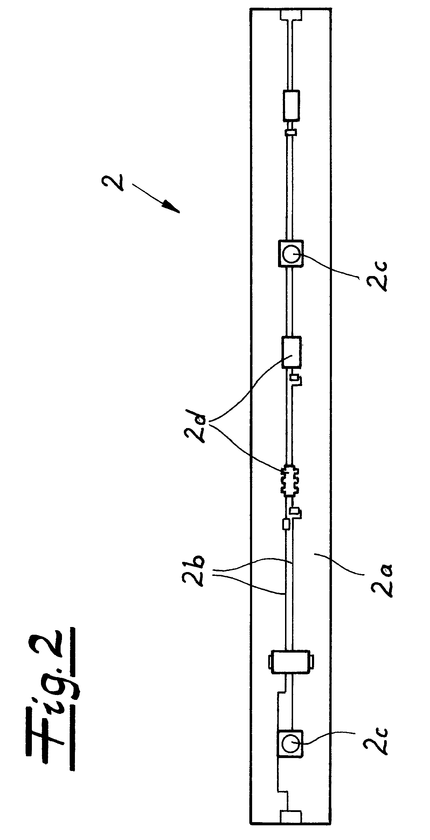

In den Figuren und insbesondere in Fig. 1 ist eine Vorrichtung zum kontinuierlichen Herstellen eines (endlosen) LED-Bandes 1 dargestellt. In dieser Vorrichtung wird ein mit mehreren Leuchtdioden bestücktes LED-Funktionsband 2 in einer Extrusionsvorrichtung 3 kontinuierlich in eine Schmelze aus einem transparenten, thermoplastischen Kunststoff eingebettet. Das noch nicht in die Schmelze eingebettete LED-Funktionsband ist vereinfacht in Fig. 2 dargestellt. Es besteht im Wesentlichen aus einem Trägerband 2a, in welches Leiterbahnen 2b, Leuchtdioden 2c und weitere elektronische Bauelemente 2d integriert sind. Dieses LED-Funktionsband 2 wird beispielsweise in Rollenform angeliefert und von einer Abwickelvorrichtung 4 abgewickelt. Gegebenenfalls wird das LED-Funktionsband um eine oder mehrere Umlenkrollen 23 herumgeführt, die in Fig. 1 angedeutet sind. Jedenfalls ist es zweckmäßig, dass das LED-Funktionsband unter einer gewissen Vorspannung gehalten wird, damit das LED-Funktionsband 2 einwandfrei in das Extrusionswerkzeug 5 einläuft. Zwischen Abwickelvorrichtung 4 und Extrusionswerkzeug 5 kann im Übrigen eine Antistatikbürste 6 oder eine vergleichbare Vorrichtung angeordnet sein, um elektrostatische Aufladungen des LED-Funktionsbandes 2 zu vermeiden bzw. zu eliminieren. Die Extrusionsvorrichtung 3, in welcher das einlaufende LED-Funktionsband 2 in die Schmelze aus thermoplastischem Kunststoff eingebettet wird, weist im Wesentlichen einen Extruder, zum Beispiel Schneckenextruder 7 und ein Extrusionswerkzeug 5 auf. Ferner ist ein lediglich angedeuteter Vorratsbehälter 8 vorgesehen, aus welchem der Kunststoff in Granulatform dem Extruder 7 zugeführt wird. In diesem Vorratsbehälter 8 kann das Granulat außerdem über einen vorgegebenen Zeitraum bei einer bestimmten Temperatur vorgetrocknet werden.

Erfindungsgemäß wird als thermoplastischer, transparenter Kunststoff ein transparentes, thermoplastisches Polyurethan-Elastomer (TPU) verwendet. Das PU-Granulat wird zum Beispiel über einen Zeitraum von zwei bis drei Stunden bei einer Temperatur von 60°C bis 90°C vorgetrocknet und dann dem Schneckenextruder 7 zugeführt und in diesem aufgeschmolzen. Der Schneckenextruder 7 führt die Kunststoffschmelze dem Extrusionswerkzeug 5 zu, durch welches das LED-Funktionsband 2 hindurchgeführt wird. In dem Extrusionswerkzeug 5 wird das LED-Funktionsband folglich in die transparente Kunststoffschmelze eingebettet. Das in die Kunststoffschmelze eingebettete LED-Funktionsband tritt dann als LED-Band 1 aus dem Extrusionswerkzeug 5 aus und durchläuft eine Kalibriervorrichtung 9, welche im Ausführungsbeispiel als Wasserfilm-Kalibriervorrichtung ausgebildet ist. Diese weist ein Wasserbad mit einer Länge von mehreren Metern auf, durch welche das LED-Band im noch nicht verfestigten Zustand hindurchgeführt wird, so dass es durch Abkühlung verfestigt wird und das fertige LED-Band 1 aus der Kalibriervorrichtung 9 austritt. Der Kalibriervorrichtung 9 kann eine Abzugsvorrichtung 10 nachgeordnet sein, zum Beispiel eine herkömmliche Raupenkette. Hinter der Abzugsvorrichtung 10 kann dann eine herkömmliche Aufwickelvorrichtung 11 angeordnet sein, so dass das fertige LED-Band 1 im Anschluss als "endlose" Rollenware zur Verfügung steht.

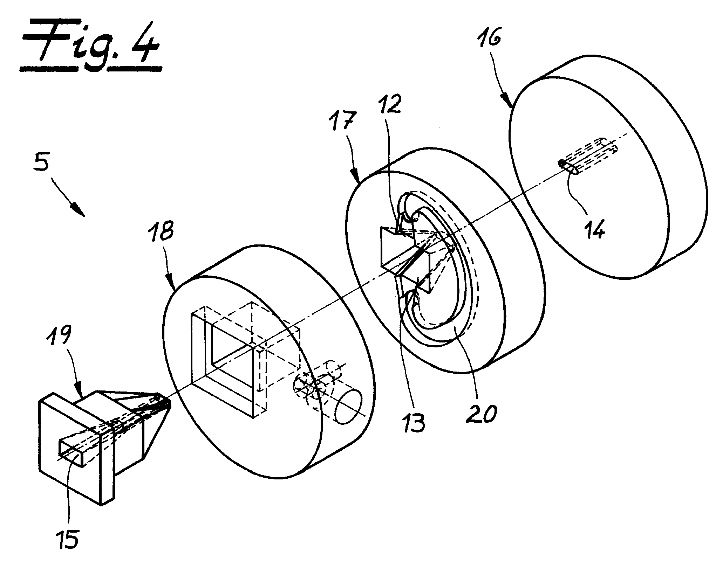

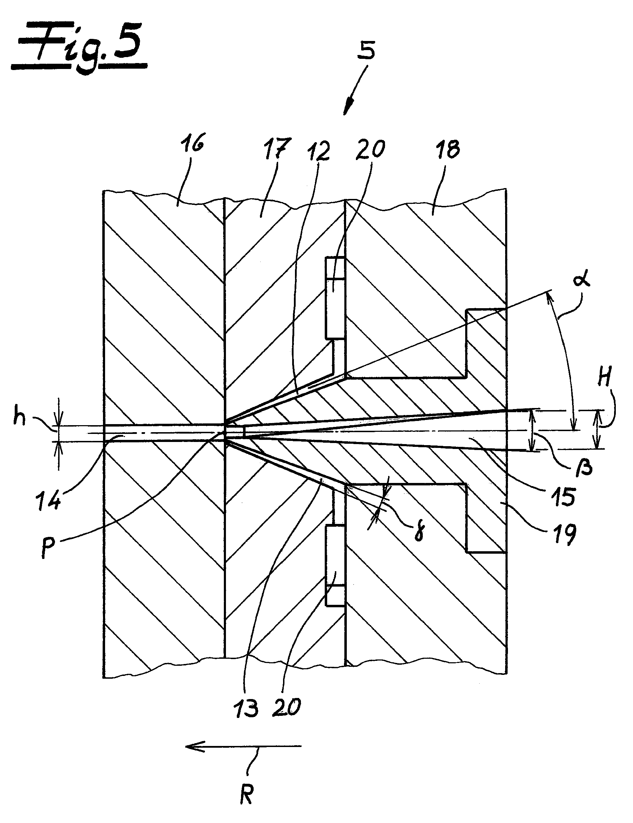

Aufbau und Funktionsweise des Extrusionswerkzeuges ergeben sich insbesondere aus den Fig. 4 bis 6. Es ist erkennbar, dass das Extrusionswerkzeug 5 im Ausführungsbeispiel einen oberen Schmelzekanal 12 und einen unteren Schmelzekanal 13 aufweist, welche in einen formgebenen Düsenkanal 14 münden, durch den das LED-Funktionsband 2 hindurchgeführt wird. In dem formgebenden Düsenkanal erhält das LED-Band folglich seine endgültige Form. Ferner ist insbesondere in Fig. 5 erkennbar, dass dem Düsenkanal 14 im Ausführungsbeispiel ein sich entgegen der Transportrichtung aufweitender Zuführkanal 15 vorgeordnet ist.

Im Ausführungsbeispiel setzt sich das Extrusionswerkzeug 5 im Wesentlichen aus drei Werkzeug-Platten 16, 17, 18 und einem Keileinsatz 19 zusammen. Der formgebende Düsenkanal 14 ist dabei in die austrittsseitige erste Platte 16 integriert. Der sich entgegen der Transportrichtung aufweitende Zuführkanal 15 ist im Bereich der zweiten Platte 17 und der dritten Platte 18 angeordnet, wobei dieser Zuführkanal 15 nicht in die Platten 17, 18 selbst eingeformt ist, sondern in einen separaten Keileinsatz 19, der in korrespondierende Ausnehmungen der zweiten Platte 17 und der dritten Platte 18 eingesetzt ist. Fig. 5 zeigt, dass die Schmelzekanäle 12, 13 im Übergangsbereich zwischen der erste Platte 16 und der zweiten Platte 17 in das eingangsseitige Ende des Düsenkanals 14 münden. Zwischen der zweiten Platte 17 und der dritten Platte 18 sind Schmelzeverteilerkanäle 20 gebildet, welche in die Schmelzekanäle 12, 13 münden und über welche die Schmelze aus dem Schneckenextruder 7 in die Schmelzekanäle 12, 13 zugeführt wird. Die beiden Schmelzekanäle 12, 13 werden dabei zwischen dem Keileinsatz 19 bzw. seinem keilförmigen vorderen Ende und der korrespondierenden Ausnehmung der zweiten Platte 17 gebildet.

Von Bedeutung ist ferner die Tatsache, dass sich der Zuführkanal 15 - ausgehend von dem Zusammenführpunkt P von Schmelze einerseits und Funktionsband 2 andererseits - entgegen der Transportrichtung R aufweitet. Diese Aufweitung ermöglicht es nun, dass die Schmelze mit der Maßgabe in das Extrusionswerkzeug eingeführt wird, dass sich in dem Zuführkanal 15 eine Schmelzewulst entgegen der Transportrichtung R ausbildet, wobei das LED-Funktionsband in diese Schmelzewulst, die in den Figuren nicht dargestellt ist, einläuft. Dieses hat zur Folge, dass das LED-Funktionsband nicht erst im Zusammenführpunkt P mit der Schmelze in Kontakt kommt, sondern dass das Funktionsband in diese Schmelzewulst einläuft. Überraschenderweise führt dieses dazu, dass sich ein LED-Band herstellen lässt, welches über die Länge einen homogenen Querschnitt aufweist, und zwar trotz der Tatsache, dass das LED-Funktionsband 2 aufgrund der Bestückung einen über Länge und Breite sehr inhomogenen Querschnitt aufweist. Die gewünschte Ausbildung der Schmelzewelle lässt sich durch Steuerung des Schneckenextruders 7 einstellen.

In den Figuren ist erkennbar, dass der obere Schmelzekanal 12 und der untere Schmelzekanal 13 jeweils unter einem vorgegebenen Winkel α schräg zur Transportrichtung R bzw. zur Horizontalen angeordnet sind. Der Winkel α beträgt zum Beispiel 10° bis 30°, im Ausführungsbeispiel etwa 20° bis 23°. α meint dabei den mittleren Winkel. Denn die Schmelzekanäle 12, 13 können sich entgegen der Schmelzflussrichtung aufweiten und folglich in Schmelzflussrichtung verjüngen. Der Öffnungswinkel γ dieser Schmelzekanäle 12, 13 beträgt zum Beispiel 1° bis 5°, im Ausführungsbeispiel etwa 3°. Außerdem ist in den Figuren der Öffnungswinkel β des Zuführkanals 15 dargestellt, wobei dieser Öffnungswinkel in etwa 3° bis 15°, vorzugsweise 5° bis 10°, im Ausführungsbeispiel etwa 6° beträgt. In den Figuren ist im Übrigen angedeutet, dass sich der Zuführkanal 15 auf eine maximale Höhe H aufweitet, welche größer als die Höhe h des formgebenden Düsenkanals 14 ist, wobei die maximale Höhe H des Zuführkanals 15 vorzugsweise zumindest 50 % größer als die Höhe h des formgebenden Düsenkanals 14 ist, besonders bevorzugt zumindest zweimal so groß.

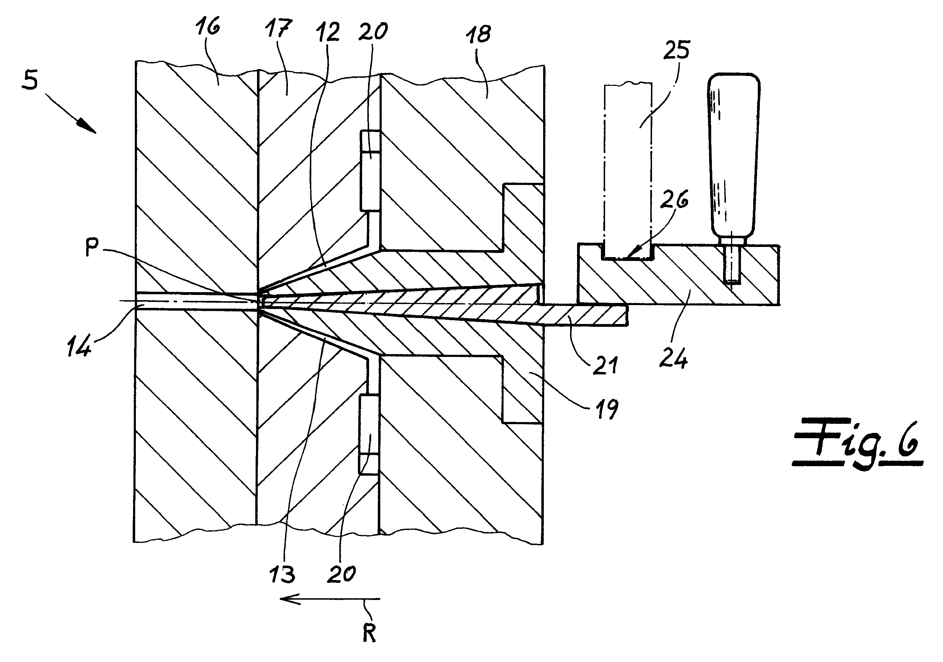

Grundsätzlich besteht die Möglichkeit, im Zuge des Anfahrens der Anlage unmittelbar ein fertigbestücktes LED-Funktionsband 2 zuzuführen. In der Praxis wurde jedoch beobachtet, dass der erste Abschnitt des auf diese Weise hergestellten LED-Bandes 1 nicht den üblichen Qualitätsanforderungen genügt, so dass in der Regel ein Ausschuss produziert wird. Nachteilig kann dabei die Tatsache sein, dass auch im Bereich dieses Ausschusses ein bestücktes LED-Funktionsband enthalten ist. Um die Kosten dieses Ausschusses zu verringern, kann es zweckmäßig sein, zunächst ein dem LED-Funktionsband 2 vorgeordnetes unbestücktes Trägerband 2a als Vorlauf in die Kunststoffschmelze einzubetten und erst nach einem Vorlauf vorgegebener Länge das bestückte LED-Funktionsband 2 in das Extrusionswerkzeug 5 einzuführen. Dieses unbestückte Trägerband 2a, welches den Vorlauf bildet, ist in der Regel fest mit dem LED-Funktionsband 2 verbunden, es ist gleichsam Teil derselben "Rolle". Es kann eine Länge von zum Beispiel 5 m bis 20 m aufweisen. Der Einsatz dieses unbestückten Trägerbandes 2a als Vorlauf hat den Vorteil, dass der Ausschuss mit minderer Qualität lediglich von einem unbestückten Band gebildet wird, so dass die Kosten verringert werden. Um den Einsatz dieses unbestückten Vorlaufbandes weiter zu optimieren, kann - so wie in Fig. 6 dargestellt - vorübergehend, nämlich im Zuge des Anlaufs der Anlage ein Kompensationseinsatz 21 in den Zuführkanal 15 eingesetzt werden. Dieser Kompensationseinsatz 21, der auch als "Schuh" bezeichnet wird, bildet einen Zuführkanal, der in seinem Querschnitt zum Beispiel dem Querschnitt des fertigen LED-Bandes entspricht. Durch diesen alternativen Zuführkanal, der in den Figuren nicht dargestellt ist, läuft das unbestückte Leerband und erst wenn sich ein zufriedenstellendes Extrusionsergebnis eingestellt hat, kann dann - sobald das bestückte LED-Funktionsband 2 folgt, herausgezogen werden. In Fig. 6 ist im Übrigen angedeutet, dass an den Kompensationseinsatz 21 ein Zusatzelement 24 angeschlossen ist, an welches wiederum ein Handgriff oder dergleichen für die Betätigung angeschlossen ist. Dieses Zusatzelement 24 ist mit einer Nut versehen, wobei während des Extrusionsprozesses in diese Nut 26 ein Arretierungselement 25 eingreift. Auf diese Weise wird verhindert, dass die Schmelze während des Extrusionsprozesses den Kompensationseinsatz 21 entgegen der Transportrichtung aus dem Werkzeug herausdrückt.

Jedenfalls lassen sich in der beschriebenen Weise LED-Bänder 1 in nahezu beliebiger Länge herstellen, die beispielsweise als Rollenware einfach gelagert und transportiert werden können. Die LED-Bänder 1 weisen in vorgegebenen Abständen sogenannte "Piercing-Stellen" auf, so dass sie unter Berücksichtigung der Abstände dieser Piercing-Stellen konfektioniert werden können.

## Patentansprüche

1. Verfahren zum kontinuierlichen Herstellen eines LED-Bandes,
wobei zumindest ein mit mehreren Leuchtdioden bestücktes LED-Funktionsband in einer Extrusionsvorrichtung kontinuierlich in eine Schmelze aus zumindest einem transparenten thermoplastischen Polyurethan Elastomer eingebettet wird,
wobei das LED-Funktionsband in eine Schmelze aus Polyurethan (PU) eingebettet wird, **dadurch gekennzeichnet, dass** die PU-Schmelze eine Temperatur von 120°C bis 130°C aufweist
und das in die PU-Schmelze eingebettete LED-Funktionsband in einer Kalibriervorrichtung unter Verfestigung der Schmelze abgekühlt wird.

2. Verfahren nach Anspruch 1, **dadurch gekennzeichnet, dass** die PU-Schmelze aus PU-Granulat hergestellt wird, welches in zumindest einem Extruder aufgeschmolzen und einem Extrusionswerkzeug zugeführt wird, durch welches das LED-Funktionsband hindurchgeführt wird.

3. Verfahren nach Anspruch 2, **dadurch gekennzeichnet, dass** das PU-Granulat vor dem Befüllen des Extruders über einen Zeitraum von mehr als einer Stunde, vorzugsweise zwei bis drei Stunden, bei einer Temperatur von mehr als 50°C, vorzugsweise 60°C bis 90°C vorgetrocknet wird.

4. Verfahren nach einem der Ansprüche 1 bis 3, **dadurch gekennzeichnet, dass** das LED-Funktionsband mit einer vorgegebenen Vorspannung durch das Extrusionswerkzeug hindurchgezogen wird.

5. Verfahren nach einem der Ansprüche 1 bis 4, **dadurch gekennzeichnet, dass** das in die PU-Schmelze eingebettete LED-Funktionsband in einer Kalibriervorrichtung durch Wasserfilmkalibrierung bei einer Wassertemperatur von 10 °C bis 25 °C, vorzugsweise 12 °C bis 20 °C, zum Beispiel 15 °C bis 18 °C, unter Verfestigung der Schmelze abgekühlt wird.

6. Verfahren nach einem der Ansprüche 1 bis 5, **dadurch gekennzeichnet, dass** das LED-Funktionsband vor und/oder während der Extrusion mit einem Haftvermittler versehen wird.

7. Verfahren nach einem der Ansprüche 1 bis 6, **dadurch gekennzeichnet, dass** das LED-Funktionsband vor dem Einführen in das Extrusionswerkzeug vorgewärmt wird.

8. Verfahren nach einem der Ansprüche 1 bis 7, **dadurch gekennzeichnet, dass** zunächst ein dem LED-Funktionsband vorgeordnetes unbestücktes Trägerband als Vorlauf in die Kunststoffschmelze eingebettet wird und dass nach einem Vorlauf vorgegebener Länge das bestückte LED-Funktionsband in das Extrusionswerkzeug einläuft.

9. Verfahren nach einem der Ansprüche 1 bis 8, **dadurch gekennzeichnet, dass** die PU-Schmelze mit der Maßgabe in das Extrusionswerkzeug eingeführt wird, das sich in dem Zuführkanal, durch den das LED-Funktionsband zugeführt wird, eine Schmelzewulst entgegen der Transportrichtung ausbildet, in die das LED-Funktionsband einläuft.

10. Verfahren nach Anspruch 9, **dadurch gekennzeichnet, dass** die PU-Schmelze mit der Maßgabe in das Extrusionswerkzeug eingeführt wird, dass sich in dem Zuführkanal eine Schmelzewulst ausbildet, deren Höhe größer als die Höhe des fertigen LED-Bandes, zum Beispiel um zumindest 50 % größer als die Höhe des fertigen LED-Bandes ist.

## Claims

1. Method for the continuous manufacturing of an LED strip,
wherein at least one LED functional strip equipped with a plurality of light-emitting diodes is continuously embedded in a melt consisting of at least one transparent thermoplastic polyurethane elastomer in an extrusion device,
wherein the LED functional strip is embedded in a melt consisting of polyurethane (PU), **characterized in that** the PU melt has a temperature of 120°C to 130°C
and the LED functional strip embedded in the PU melt is cooled in a calibration device, solidifying the melt.

2. Method according to Claim 1, **characterized in that** the PU melt is produced from PU granulate which is melted in at least one extruder and is supplied to an extrusion tool, the LED functional strip being passed through said extrusion tool.

3. Method according to Claim 2, **characterized in that** before filling the extruder the PU granulate is pre-dried over a time period of more than an hour, preferably two to three hours, at a temperature of more than 50°C, preferably 60°C to 90°C.

4. Method according to one of Claims 1 to 3, **characterized in that** the LED functional strip is drawn through the extrusion tool with predetermined pretensioning.

5. Method according to one of Claims 1 to 4, **characterized in that** the LED functional strip embedded in the PU melt is cooled in a calibration device by water film calibration at a water temperature of 10°C to 25°C, preferably 12°C to 20°C, for example 15°C to 18°C, solidifying the melt.

6. Method according to one of Claims 1 to 5, **characterized in that** the LED functional strip is provided before and/or during the extrusion with an adhesion agent.

7. Method according to one of Claims 1 to 6, **characterized in that** the LED functional strip is preheated before insertion into the extrusion tool.

8. Method according to one of Claims 1 to 7, **characterized in that** an unequipped carrier strip arranged upstream of the LED functional strip is initially embedded as a preliminary strip in the plastic melt and **in that**, following a preliminary strip of predetermined length, the equipped LED functional strip travels into the extrusion tool.

9. Method according to one of Claims 1 to 8, **characterized in that** the PU melt is introduced into the extrusion tool with the proviso that a melt bead is formed counter to the direction of travel in the supply channel, the LED functional strip being supplied through said supply channel and the LED functional strip travelling into said melt bead.

10. Method according to Claim 9, **characterized in that** the PU melt is introduced into the extrusion tool with the proviso that a melt bead is formed in the supply channel, the height thereof being greater than the height of the finished LED strip, for example at least 50% greater than the height of the finished LED strip.

## Revendications

1. Procédé pour fabriquer en continu une bande à diodes électroluminescentes (DEL),
au moins une bande fonctionnelle à DEL dotée de plusieurs diodes électroluminescentes étant incorporée en continu dans un dispositif d'extrusion dans une masse en fusion d'au moins un élastomère, polyuréthane thermoplastique transparent,
la bande fonctionnelle à DEL étant incorporée dans une masse en fusion de polyuréthane (PU), **caractérisé en ce que**
la masse en fusion de PU comporte une température de 120° C à 130° C,
et la bande fonctionnelle à DEL incorporée dans la masse en fusion de PU est refroidie dans un dispositif de calibrage en solidifiant de la masse en fusion.

2. Procédé selon la revendication 1, **caractérisé en ce que** la masse en fusion de PU est élaborée à partir de granulés de PU, qui sont acheminés fondus dans au moins une extrudeuse et dans un outil d'extrusion à travers lequel est passée la bande fonctionnelle à DEL.

3. Procédé selon la revendication 2, **caractérisé en ce que** les granulés de PU sont préséchés avant le remplissage de l'extrudeuse pendant une période de plus d'une heure, de préférence deux à trois heures, à une température de plus de 50° C, de préférence 60° C à 90° C.

4. Procédé selon l'une quelconque des revendications 1 à 3, **caractérisé en ce que** la bande fonctionnelle à DEL est passée à travers l'outil d'extrusion avec une précontrainte prédéfinie.

5. Procédé selon l'une quelconque des revendications 1 à 4, **caractérisé en ce que** la bande fonctionnelle à DEL incorporée dans la masse en fusion de PU est refroidie en solidifiant la masse en fusion dans un dispositif de calibrage par calibrage à pellicule d'eau à une température d'eau de 10° C à 25° C, de préférence 12° C à 20° C, par exemple 15° C à 18° C.

6. Procédé selon l'une quelconque des revendications 1 à 5, **caractérisé en ce que** la bande fonctionnelle à DEL est dotée avant et/ou pendant l'extrusion d'un agent adhésif.

7. Procédé selon l'une quelconque des revendications 1 à 6, **caractérisé en ce que** la bande fonctionnelle à DEL est préchauffée avant l'introduction dans l'outil d'extrusion.

8. Procédé selon l'une quelconque des revendications 1 à 7, **caractérisé en ce qu'**une bande de support non équipée montée en amont de la bande fonctionnelle à DEL est incorporée en tant qu'amorce dans la masse en fusion de matière plastique et **en ce que** la bande fonctionnelle à DEL équipée pénètre dans l'outil d'extrusion après une amorce de longueur prédéfinie.

9. Procédé selon l'une quelconque des revendications 1 à 8, **caractérisé en ce que** la masse en fusion de PU est introduite conformément dans l'outil d'extrusion de manière qu'il se forme dans le conduit d'alimentation à travers lequel est acheminée la bande fonctionnelle à DEL, un bourrelet de masse en fusion à l'opposé de la direction de transport, dans lequel pénètre la bande fonctionnelle à DEL.

10. Procédé selon la revendication 9, **caractérisé en ce que** la masse en fusion de PU est introduite conformément dans l'outil d'extrusion de manière qu'un bourrelet de masse en fusion se forme dans le conduit d'alimentation, dont la hauteur est plus grande que la hauteur de la bande à DEL finie, par exemple plus grande d'au moins 50 % que la hauteur de la bande à DEL finie.
